# EUROPÄISCHE PATENTSCHRIFT

(11) **EP 3 301 124 B1**
(45) Veröffentlichungstag und Bekanntmachung des Hinweises auf die Patenterteilung: **26.04.2023**
(21) Anmeldenummer: 17192346.9
(22) Anmeldetag: 21.09.2017
(51) Int. Cl.: B33Y 10/00, B33Y 80/00, C08G 69/14, C08L 77/02, B29C 64/153, C08G 69/26, B33Y 70/10, B29K 77/00, B33Y 70/00

(54) **POLYAMIDPULVER FÜR SELEKTIVE SINTERVERFAHREN**
POLYAMIDE POWDER FOR SELECTIVE SINTERING METHOD
POUDRE POLYAMIDE POUR PROCÉDÉ DE FRITTAGE SÉLECTIF

(30) Priorität: 30.09.2016 DE 102016219082
(43) Veröffentlichungstag der Anmeldung: 04.04.2018
(73) Patentinhaber: Evonik Operations GmbH, 45128 Essen (DE)
(72) Erfinder: Diekmann, Wolfgang, 45731 Waltrop (DE); Grebe, Maik, 44805 Bochum (DE); Baumann, Franz-Erich, 48249 Dülmen (DE); Monsheimer, Sylvia, 45721 Haltern am See (DE); Küting, Beatrice, 45772 Marl (DE)
(74) Vertreter: Evonik Patent Association

(56) Entgegenhaltungen:
- EP-A1- 1 642 923
- DE-A1- 10 330 590

## Beschreibung

Die vorliegende Erfindung betrifft Polyamidpulver für ihren Einsatz in Powder Bed Fusion-Verfahren, und ihre Verwendung. Weiterhin betrifft die Erfindung Formkörper sowie deren Herstellung.

Generative Fertigungsverfahren, häufig auch als Additive Manufacturing oder Rapid Prototyping bezeichnet, werden eingesetzt, um dreidimensionale Objekte schnell und kostengünstig fertigen zu können. Diese Fertigung erfolgt direkt auf der Basis der rechnerinternen Datenmodelle aus formlosem (Flüssigkeiten, Pulver u. ä.) oder formneutralem (band-, drahtförmig) Material mittels chemischer und/oder physikalischer Prozesse. Insbesondere Polymerpulver wie Polyamidpulver eignen sich als formloses Material.

Die Powder Bed Fusion-Technologie umfasst unter anderem das Direkte Metall-Lasersintern (DMLS), das Elektronenstrahlschmelzen (EBM), das Selective Heat Sintering (SHS), das selektive Laserschmelzen (SLM), das selektive Lasersintern (SLS), das Selective Absorbing Sintering (SAS) und das Selective Inhibition Sintering (SIS).

Durch den Einsatz des Polyamidpulvers bei der Formkörperherstellung, die üblicherweise 10 bis 20 K unterhalb der Schmelztemperatur stattfinden, können Alterungserscheinungen auftreten. Hierbei reagieren die Amin- und Carbonsäureendgruppen miteinander und sorgen für eine Verlängerung der Polyamidketten. Eine erneute Verarbeitung des Pulvers nicht mehr möglich ist, so dass das nicht verarbeitete Pulver auszutauschen ist.

Während eines Bauvorgangs ruht das entstehende Objekt innerhalb des es umgebenden Pulverbetts aus unverfestigtem Pulver und wird durch dieses abgestützt. Dadurch bedingt liegen nach Abschluss eines Bauvorgangs in der Regel erhebliche Mengen an unverfestigtem Pulver vor, so dass es wünschenswert ist, dieses sogenannte Altpulver soweit als möglich für einen weiteren Bauvorgang zu verwenden. Da das unverbrauchte Pulver während eines Bauvorgangs über lange Zeiträume hinweg hohen Temperaturen knapp unterhalb seiner Schmelztemperatur ausgesetzt ist, gibt es jedoch das Problem, dass durch diese Umweltbedingungen das Pulver einem Alterungsprozess unterliegen kann, bei dem es thermisch und/oder thermooxidativ geschädigt wird. Zudem kann eine Kettenverlängerung und folglich ein Molekülgewichtsaufbau erfolgen. Dies führt dazu, dass für weitere Bauvorgänge das Altpulver mit Neupulver vermischt werden muss. EP 2368696 A1 (US 2011/237731 A1) beschreibt Polyamid 12-Pulver, welches in Powder Bed Fusion-Verfahren eingesetzt werden kann. Das Pulver stellt eine Mischung aus zwei verschiedenen Polyamiden 12 dar. Das erste Polyamid 12 weist einen Anstieg der Viskositätszahl nach ISO 307 um weniger als 10% auf, wohingegen das zweite Polyamid 12 charakterisiert ist durch einen Anstieg der Viskositätszahl von 15% oder mehr (jeweils unter Stickstoffatmosphäre für 20 Stunden; die Polyamide wurden jeweils einer Temperatur ausgesetzt wird, die 10°C unterhalb ihrer Schmelztemperatur liegen). Hierbei ist es bevorzugt, wenn der Anteil des ersten Polyamid 12 in der Mischung mit zweitem Polyamid 12 zwischen 10 und 30 Gewichtsprozent liegt. DE10330509 und EP1642923 beschrieben Polyamid 12-Pulver, welche in Powder Bed-Fusion-Verfahren eingesetzt werden. Die Polyamid-Pulver zeigen nahezu konstante Lösungsviskositäten.

Nachteilig ist jedoch der Einsatz einer Pulvermischung bestehend aus zwei Polyamiden unterschiedlicher Eigenschaften. Während das erste Polyamid einen geringen Anstieg zeigt, hat das zweite Polyamid einen sehr hohen Anstieg der Viskosität. Dies führt im Laufe der Zeit zu extremen Inhomogenitäten, schließlich fällt der Viskositätsanstieg der beiden Polyamide deutlich auseinander. Die Folge sind Formkörper, hergestellt durch Powder Bed Fusion-Verfahren, die inhomogene und anisotrope mechanische Eigenschaften haben. Zudem können die Formkörper eine größere Streuung der mechanischen Kennwerte, insbesondere der Reißdehnung, erfahren.

Somit bestand die Aufgabe in der Bereitstellung eines Polyamidpulvers, welches in Powder Bed Fusion-Verfahren eingesetzt werden kann, wobei das Polyamidpulver und daraus hergestellte Formkörper homogene Eigenschaften zeigen sollen. Zudem sollte das nicht verarbeitete Pulver erneut herangezogen werden können. Hierdurch können Kosten reduziert und die Umwelt geschont werden. Die erhaltenen Formkörper sollten gleichbleibende und homogene mechanische Eigenschaften wie Reißdehnung, Formtreue, scharfe Kanten und Prozessrobustheit aufweisen.

Demnach wurden Polyamidpulver für Powder Bed Fusion-Verfahren gemäß der Ansprüche gefunden, die die Nachteile des Standes der Technik nicht aufweisen. Die Polyamide weisen eine Lösungsviskosität nach ISO 307 von 1,55 bis 1,75 auf. Zudem beträgt der Anstieg der Lösungsviskosität 10 bis 40 %, vorzugsweise 20 % bis 30 %, wenn das Polyamidpulver unter Stickstoffatmosphäre für 24 h einer Temperatur ausgesetzt wird, die 10 °C unterhalb seiner Schmelztemperatur liegt.

Eine Temperatur von 10 °C unterhalb der Schmelztemperatur unter Stickstoffatmosphäre für 24 h ist eine Testbedingung, die reale Bedingungen nachstellt, welche in einem Bauraum zur Herstellung von Formkörpern herrschen. Hierdurch soll die Vergleichbarkeit verschiedener Materialien gewährleistet werden.

Die Aufgabe wurde gelöst durch ein Polyamidpulver, das über den Zeitraum von 24 h lediglich einen geringen und einheitlichen Anstieg der Lösungsviskosität zeigt. Dadurch lässt es sich mehrfach wiederverwenden. Resultierende Formkörper zeigen homogene, isotrope mechanische Eigenschaften.

Die Lösungsviskosität wird in einer Doppelbestimmung nach ISO 307 an Hand folgender Parameter bestimmt: Schott AVS Pro, Lösemittel m-Kresol sauer, volumetrisches Verfahren, Lösetemperatur 100 °C, Lösezeit 2 h, Polymerkonzentration 5 g/L, Messtemperatur 25 °C.

Zur Bestimmung des Anstiegs der Lösungsviskosität wird das Pulver für 24 h unter Stickstoff einer Temperatur ausgesetzt, die 10 °C unterhalb seiner Schmelztemperatur liegt. Die Lösungsviskosität der jeweiligen Pulver wird im Anschluss wie zuvor genannt ermittelt.

Die Schmelztemperatur wird mittels Dynamischer Differenzkalorimetrie (DSC) nach DIN 53765 ermittelt. Maßgeblich ist die Schmelztemperatur des ersten Aufheizens. Die Heiz- und Kühlrate beträgt jeweils 20 K/min. Die Messungen erfolgten mittels DSC 7 von Perkin Elmar.

Das Polyamid weist Carbonsäureendgruppen im Überschuss auf. Der Überschuss kann durch Dicarbonsäuren erzielt werden. Zudem können weiterhin Monoamine oder Monocarbonsäuren, vorzugsweise Monocarbonsäuren, zugegeben werden. Bezogen auf die Masse des Polyamidpulvers beträgt der Überschuss der Carbonsäureendgruppe gegenüber den Aminendgruppen 20 bis 60 mmol/kg.

Das Polyamidpulver nimmt vorzugsweise 1000 pL bis 30000 pL Flüssigkeit pro g Polyamidpulver auf, vorzugsweise 3000 pL bis 25000 pL und bevorzugt 5000 pL bis 20000 pL.

Um eine bessere Verarbeitbarkeit des Polyamidpulvers zu erreichen, kann es vorteilhaft sein, dass Additive hinzugefügt werden. Derartige Additive können z. B. Rieselhilfen sein. Besonders bevorzugt weist das das Polyamidpulver 0,05 bis 5 Gew.-%, vorzugsweise von 0,1 bis 1 Gew.-%, bezogen auf das Gesamtgewicht der Polyamidpulver, an Additiven auf. Rieselhilfen können z. B. pyrogene Kieselsäuren, Stearate oder andere literaturbekannte Rieselhilfen, wie z. B. Tricalciumphosphat, Calciumsilicate, Al₂O₃, MgO, MgCO₃ oder ZnO sein. Pyrogene Kieselsäure wird beispielsweise unter dem Markennamen Aerosil^{®} von Evonik Industries AG angeboten.

Neben oder an Stelle von solchen zum Teil anorganischen Rieselhilfen oder anderen Additiven kann das Polyamidpulver auch anorganische Füllkörper aufweisen. Die Verwendung solcher Füllkörper hat den Vorteil, dass diese ihre Form durch die Behandlung beim Verbinden im Wesentlichen beibehalten und somit den Schrumpf des Formkörpers verringern. Zudem ist es durch die Verwendung von Füllkörpern z. B. möglich, die plastischen und physikalischen Eigenschaften der Objekte zu verändern. So können durch Verwendung von Pulvermaterial, welches Metallpulver aufweist, sowohl die Transparenz und Farbe als auch die magnetischen oder elektrischen Eigenschaften des Objektes eingestellt werden. Als Füllstoffe bzw. -körper kann das Pulvermaterial z. B. Glaspartikel, Keramikpartikel oder Metallpartikel aufweisen. Typische Füllstoffe sind z. B. Metallgriese, Aluminiumpulver, Stahl- oder Glaskugeln. Besonders bevorzugt werden Pulvermaterialien eingesetzt, die als Füllkörper Glaskugeln aufweisen. In einer bevorzugten Ausführungsvariante weist das erfindungsgemäße Pulvermaterial von 1 bis 70 Gew.-%, vorzugsweise von 5 bis 50 Gew.-% und ganz besonders bevorzugt von 10 bis 40 Gew.-% an Füllkörpern auf, bezogen auf das Gesamtgewicht des Polyamidpulvers.

Die Polyamide oder Co-Polyamide sind ausgewählt aus Polyamid 6, 11, 12, 1013, 1012, 66, 46, 613, 106, 11/1010, 1212 und 12/1012. Ein bevorzugtes Polyamid ist ausgewählt aus Polyamid 11, 12, 1013, 1012, 66, 613, 11/1010, 1212 und 12/1012, besonders bevorzugt Polyamid 11 oder 12 und ganz besonders bevorzugt Polyamid 12.

Üblicherweise soll ein Polyamidpulver, das in Sinterverfahren eingesetzt wird, eine möglichst geringe BET-Oberfläche aufweisen. Im Stand der Technik wird offenbart, dass der Wert beispielsweise weniger als 7 m²/g zeigen soll. Das erfindungsgemäße Polyamidpulver sollte eine BET-Oberfläche, gemessen nach DIN ISO 9277, von mindestens 1 m²/g, vorzugsweise von mindestens 2,5 m²/g, besonders bevorzugt von mindestens 5,5 m²/g, ganz besonders bevorzugt von mindestens 7 m²/g, und insgesonderevon 7,5 m²/g bis 30 m²/g, aufweisen. Zu einer besonders bevorzugten Ausführungsform zählen Polyamide mit einer BET-Oberfläche von mindestens 7 m²/g, vorzugsweise von 7,5 m²/g bis 30 m²/g. Die Messung erfolgt mit dem Gerät Micromeritics TriStar 3000, Gasadsorption von Stickstoff, diskontinuierliches, volumetrisches Verfahren, 7 Messpunkte bei Relativdrücken P/P0 zwischen ca. 0,05 und ca. 0,20, Kalibrierung des Totvolumens mittels He (99,996 %), Probenvorbereitung 1 h bei 23 °C + 16 h bei 80 °C unter Vakuum, spezifische Oberfläche auf die entgaste Probe bezogen, Auswertung erfolgte mittels Mehrpunktbestimmung.

In einer bevorzugten Ausführungsform weist das Polyamidpulver eine kumulative Porenvolumenverteilung von mindestens 0,02 cm³/g und eine BET-Oberfläche von mindestens 2,8 m²/g auf, vorzugswiese 0,04 cm³/g und 5,8 m²/g, bevorzugt 0,05 cm³/g und 10 m²/g und besonders bevorzugt von 0,07 cm³/g und 13 m²/g.

Der gewichtsmittlere Korndurchmesser d₅₀ des Polyamidpulvers, gemessen mittels Laserbeugung, soll vorzugsweise nicht mehr als 100 µm, vorzugsweise 10 µm bis 80 µm, betragen (Malvern Mastersizer 3000; die Nassdispergierung erfolgte nassdispergiert in Wasser, Brechungsindex und Blaulichtwert festgelegt mit 1,52; Auswertung über Mie-Theorie; Trockenmessung, 20-40g Pulver mittels Scirocco Trockendispergiergerät zudosiert; Zuführrate Rüttelrinne 70%, Dispergierluftdruck 3 bar; Messzeit der Probe 5 Sekunden (5000 Einzelmessungen)). Polymere mit derartigen Durchmessern werden auch als Polymerpulver bezeichnet.

Es ist von Vorteil, wenn das Polyamidpulver mit einem Partikeldurchmesser von weniger als 10,48 µm (Feinstpartikel) in geringer Menge vorhanden ist. Der Anteil an Feinstpartikel sollte weniger als 3 Gew.-%, bevorzugt weniger als 1,5 Gew.-% und besonders bevorzugt weniger als 0,75 Gew.-%, jeweils bezogen auf das Gesamtgewicht an Polyamidpulver, betragen. Hierdurch wird die Staubentwicklung reduziert und eine Verbesserung der Verarbeitbarkeit (Prozessierbarkeit) ermöglicht. Die Abtrennung von Feinstpartikeln kann beispielsweise mittels Sichtung erfolgen.

Weiterhin sind Polyamidpulver bevorzugt, deren Schüttdichte, gemessen nach DIN 53466, zwischen 300 g/L und 600 g/L liegt.

Weiterhin stellen Polyamide mit einer Oberflächenenergie von nicht mehr als 35 mN/m, vorzugsweise von 25 mN/m bis 32 mN/m, bevorzugte Polyamidee dar. Die Oberflächenenergie wird ermittelt mittels Kontaktwinkelmessung nach der Kapillarsteighöhenmethode durch Einsatz der Washburn-Gleichung und dem Auswerteverfahren nach Owens, Wendt, Rabel und Kaelble. Derartige Polyamidpulver weisen eine möglichst gleichmäßige Fließfähigkeit auf, die in einer hohen Formstabilität der Formkörper resultiert.

Das Polyamidpulver und seine Zusammensetzung können durch einen Mahlen des hergestellten Pulvers oder durch einen Fällprozess (Umfällung) erhalten werden, wobei der Fällprozess bevorzugt ist.

In dem Fällprozess wird das Polyamid unter Einwirkung erhöhter Temperatur zumindest teilweise gelöst und anschließend durch Temperaturverringerung ausgefällt. Geeignete Lösemittel für Polyamide sind beispielsweise Alkohole wie Ethanol. US5932687 nennt beispielsweise geeignete Prozessbedingungen. Zur Einstellung der gewünschten Eigenschaft ist es vorteilhaft, die erhaltene Suspension nach der Ausfällung 10 min bis 180 min bei einer Temperatur 2-4 K oberhalb der Fälltemperatur zu belassen.

Ein weiterer Gegenstand der Erfindung ist ein Verfahren zur Herstellung des zuvor genannten Polyamidpulvers. Es umfasst die Polymerisation und/oder Polykondensation von Monomeren zu einem Polyamid (Schritt a) und die Pulverherstellung durch Mahlen oder Umfällen (Schritt b). Im Schritt a werden Dicarbonsäuren zur Erzielung eines Carbonsäureendgruppenüberschussess als Regler zugegeben. Die Dicarbonsäuren werden in einem Verhältnis zugegeben, dass ein Überschuss an Carbonsäureendgruppen 20 bis 60 mmol/kg beträgt (bezogen auf die Masse des Polyamidpulvers). Zusätzlich können Monoamine oder Monocarbonsäuren eingesetzt werden.

Geeignete Monomere sind beispielsweise Monomere, die zur Herstellung der Polyamide 6, 11, 12, 1013, 1012, 66, 46, 613, 106, 11/1010, 1212 und 12/1012 geeignet sind.

Geeignete Monoamine und Monocarbonsäuren zur Einstellung des Überschusses an Endgruppen weisen bevorzugt die gleiche Anzahl an Kohlenstoffatomen aufweisen wie die Monomere der Polyamide. Beispielsweise seien Butylamin, Hexanamin, Decanamin und Dodecanamin sowie Capronsäure, Caprinsäure, Laurinsäure, Tridecansäure genannt.

Geeignete Diamine und Dicarbonsäuren zur Einstellung des Überschusses an Endgruppen können gleich oder verschieden sein zu den Monomeren der Polyamide. Exemplarisch seien Tetramethylendiamin, Hexamethylendiamin, Decandiamin, Dodecandiamin, Adipinsäure, Sabacinsäure, Dodecansäure, Brasylsäure genannt. Es ist bevorzugt, dass die Diamine bzw. Dicarbonsäuren die gleiche Anzahl an Kohlenstoffatomen aufweisen wie die Monomere der Polyamide.

In einer Ausführungsform der Erfindung kann das Polyamid durch Cofällung erhalten werden. Hierzu wird in Schritt a) zumindest ein Polyamid des AB-Typs, hergestellt durch Polymerisation von Lactamen mit 4 bis 14 Kohlenstoffatomen in der Monomereinheit oder durch Polykondensation der entsprechenden w-Aminocarbonsäuren mit 4 bis 14 Kohlenstoffatomen in der Monomereinheit und zumindest ein Polyamid des AABB-Typs, hergestellt durch Polykondensation von Diaminen und Dicarbonsäuren mit jeweils 4 bis 14 Kohlenstoffatomen in den Monomereinheiten, erhalten. Hierbei wird das Pulver in Schritt b) durch gemeinsame Fällung des zumindest einen Polyamids des AB-Typs und des zumindest einen Polyamids des AABB-Typs erhalten.

Ein weiterer Gegenstand der Erfindung ist die Verwendung des erfindungsgemäßen Polyamidpulvers in Powder Bed Fusion-Verfahren zur Herstellung von Formkörpern.

Weiterhin bilden Formkörper, die zumindest teilweise aus erfindungsgemäßen Polyamidpulvern erhalten werden, einen weiteren Gegenstand der Erfindung. Darüber hinaus sind Verfahren zur Herstellung von Formkörpern mittels Powder Bed Fusion-Verfahren, wobei das erfindungsgemäße Polyamidpulver eingesetzt wird, ebenfalls Gegenstand der Erfindung.

### Beispiel

### Beispiel 1

Es wurde ein Polyamid 12 hergestellt. Neben Laurinlactam als Monomer wurde Dodecansäure eingesetzt, um einen Überschuss an Dicarbonsäureendgruppen zu erhalten. Das Pulver wurde mittels Fällprozess erhalten.

### Beispiel 2

Es wurde ein Polyamid 12 hergestellt. Neben Laurinlactam als Monomer wurde Dodecansäure eingesetzt, um einen Überschuss an Dicarbonsäureendgruppen zu erhalten. Das Pulver wurde mittels Fällprozess erhalten.

Die Schmelztemperatur und die Lösungsviskosität der erhaltenen Pulver wurden bestimmt. Im Anschluss wurde das Pulver für 24 h unter Stickstoff einer Temperatur ausgesetzt, die 10 °C unterhalb seiner Schmelztemperatur liegt und die Lösungsviskosität laufend ermittelt.
Schmelztemperatur Polyamid nach Beispiel 1: 185 °C
Schmelztemperatur Polyamid nach Beispiel 2: 185 °C
Temperatur zur Nachstellung der Alterung: 175 °C

| **Zeit / h** | **Lösungsviskosität Polyamid Beispiel 1** | **Lösungsviskosität Polyamid Beispiel 2** |
|---|---|---|
| 0 | 1,64 | 1,63 |
| 1 | 1,73 | 1,71 |
| 2 | 1,85 | 1,77 |
| 4 | 1,94 | 1,85 |
| 8 | 2,02 | 1,96 |
| 24 | 2,08 | 2,07 |

## Patentansprüche

1. Polyamidpulver für Powder Bed Fusion-Verfahren, wobei das Polyamid ausgewählt ist aus Polyamid 6, 11, 12, 1013, 1012, 66, 46, 613, 106, 11/1010, 1212 und 12/1012, wobei das Polyamid eine Lösungsviskosität in m-Kresol nach ISO 307 von 1,55 bis 1,75 und einen Anstieg der Lösungsviskosität von 10 % bis 40 %, vorzugsweise 20 % bis 30 %, aufweist, wenn es unter einer Stickstoffatmosphäre für 24 h einer Temperatur ausgesetzt wird, die 10 °C unterhalb seiner Schmelztemperatur liegt, und wobei im Polyamid Carbonsäureendgruppen im Überschuss vorliegen, **dadurch gekennzeichnet, dass** der Überschuss der Carbonsäureendgruppen gegenüber den Aminendgruppen 20 bis 60 mmol/kg Polyamidpulver beträgt.

2. Polyamidpulver nach Anspruch 1, **dadurch gekennzeichnet, dass** der Überschuss durch Dicarbonsäuren erzielt wird.

3. Polyamidpulver nach einem der vorherigen Ansprüche, **dadurch gekennzeichnet, dass** die BET-Oberfläche des Polyamidpulvers, gemessen nach DIN ISO 9277, mindestens 1 m²/g, vorzugsweise 2,5 m²/g, aufweist.

4. Polyamidpulver nach einem der vorherigen Ansprüche, **dadurch gekennzeichnet, dass** der gewichtsmittlere Korndurchmesser d₅₀ des Polyamidpulvers, gemessen mittels Laserbeugung, nicht mehr als 100 µm, vorzugsweise 10 µm bis 80 µm, beträgt.

5. Polyamidpulver nach einem der vorherigen Ansprüche, **dadurch gekennzeichnet, dass** die Schüttdichte, gemessen nach DIN 53466, zwischen 300 g/L und 600 g/L liegt.

6. Polyamidpulver nach einem der vorherigen Ansprüche, **dadurch gekennzeichnet, dass** es durch einen Fällprozess erhalten wird.

7. Polyamidpulver nach einem der vorherigen Ansprüche, **dadurch gekennzeichnet, dass** das Polyamid ausgewählt ist aus der Gruppe Polyamid 6, 11, 12, 1013, 1012, 66, 46, 613, 106 und 12/1012.

8. Polyamidpulver nach einem der vorherigen Ansprüche, **dadurch gekennzeichnet, dass** die Oberflächenenergie der Polyamide, ermittelt mittels Kontaktwinkelmessung nach der Kapillarsteighöhenmethode durch Einsatz der Washburn-Gleichung und dem Auswerteverfahren nach Owens, Wendt, Rabel und Kaelble, nicht mehr als 35 mN/m, vorzugsweise 25 mN/m bis 32 mN/m, beträgt.

9. Verfahren zur Herstellung eines Polyamidpulvers nach einem der Ansprüche 1 bis 8, umfassend die Schritte
a) Polymerisation und/oder Polykondensation von Monomeren zu einem Polyamid,
b) Pulverherstellung durch Mahlen oder Umfällen,
**dadurch gekennzeichnet, dass** in Schritt a) Dicarbonsäuren zur Erzielung eines Carbonsäureendgruppenüberschusses als Regler zugegeben werden, wobei die Dicarbonsäuren in einem Verhältnis zugegeben werden, um einen Überschuss von 20 bis 60 mmol/kg an Carbonsäureendgruppen (bezogen auf die Masse des Polyamidpulvers) zu erreichen.

10. Verfahren nach Anspruch 9, **dadurch gekennzeichnet, dass** in Schritt a) zumindest ein Polyamid des AB-Typs, hergestellt durch Polymerisation von Lactamen mit 4 bis 14 Kohlenstoffatomen in der Monomereinheit oder durch Polykondensation der entsprechenden w-Aminocarbonsäuren mit 4 bis 14 Kohlenstoffatomen in der Monomereinheit und zumindest ein Polyamid des AABB-Typs, hergestellt durch Polykondensation von Diaminen und Dicarbonsäuren mit jeweils 4 bis 14 Kohlenstoffatomen in den Monomereinheiten, erhalten wird, wobei das Pulver in Schritt b) durch gemeinsame Fällung des zumindest einen Polyamids des AB-Typs und des zumindest einen Polyamids des AABB-Typs erhalten wird.

11. Verwendung eines Polyamidpulvers nach einem der Ansprüche 1 bis 8 in Powder Bed Fusion-Verfahren zur Herstellung von Formkörpern.

12. Formkörper, die zumindest teilweise aus dem Polyamidpulver nach einem der Ansprüche 1 bis 8 erhalten werden.

13. Verfahren zur Herstellung von Formkörpern mittels Powder Bed Fusion-Verfahren, **dadurch gekennzeichnet, dass** ein Polyamidpulver nach einem der Ansprüche 1 bis 8 eingesetzt wird.

## Claims

1. Polyamide powder for powder bed fusion methods, wherein the polyamide is selected from polyamide 6, 11, 12, 1013, 1012, 66, 46, 613, 106, 11/1010, 1212 and 12/1012, wherein the polyamide exhibits a solution viscosity in m-cresol to ISO 307 of 1.55 to 1.75 and an increase in solution viscosity of 10% to 40%, preferably 20% to 30%, when under a nitrogen atmosphere it is subjected to a temperature 10°C below its melting temperature for 24 h, and wherein carboxylic acid end groups in excess are present in the polyamide, **characterized in that** the excess of the carboxylic acid end groups relative to the amine end groups is 20 to 60 mmol/kg of polyamide powder.

2. Polyamide powder according to Claim 1, **characterized in that** the excess is achieved through dicarboxylic acids.

3. Polyamide powder according to either of the preceding claims, **characterized in that** the BET surface area of the polyamide powder, measured to DIN ISO 9277, is at least 1 m²/g, preferably 2.5 m²/g.

4. Polyamide powder according to any of the preceding claims, **characterized in that** the weight-average particle diameter d₅₀ of the polyamide powder, measured by means of laser diffraction, is not more than 100 µm, preferably 10 µm to 80 µm.

5. Polyamide powder according to any of the preceding claims, **characterized in that** the bulk density, measured to DIN 53466, is between 300 g/l and 600 g/l.

6. Polyamide powder according to any of the preceding claims, **characterized in that** it is obtained by a precipitation process.

7. Polyamide powder according to any of the preceding claims, **characterized in that** the polyamide is selected from the group polyamide 6, 11, 12, 1013, 1012, 66, 46, 613, 106 and 12/1012.

8. Polyamide powder according to any of the preceding claims, **characterized in that** the surface energy of the polyamides, determined by means of contact angle measurement by the capillary rise height method using the Washburn equation and the evaluation method according to Owens, Wendt, Rabel and Kaelble is not more than 35 mN/m, preferably 25 mN/m to 32 mN/m.

9. Process for preparing a polyamide powder according to any of claims of Claims 1 to 8, comprising the steps of
a) polymerization and/or polycondensation of monomers to give a polyamide,
b) powder production by grinding or reprecipitation,
**characterized in that** in step a) dicarboxylic acids to achieve a carboxylic acid end group excess are added as chain transfer agents, wherein the dicarboxylic acids are added in a ratio so as to achieve an excess of 20 to 60 mmol/kg of carboxylic acid end groups (based on the mass of the polyamide powder).

10. Process according to Claim 9, **characterized in that** at least one polyamide of the AB type, produced by polymerization of lactams having 4 to 14 carbon atoms in the monomer unit or by polycondensation of the corresponding ω-aminocarboxylic acids having 4 to 14 carbon atoms in the monomer unit, and at least one polyamide of the AABB type, produced by polycondensation of diamines and dicarboxylic acids each having 4 to 14 carbon atoms in the monomer units, is obtained in step a), wherein the powder is obtained in step b) by coprecipitation of the at least one polyamide of the AB type and the at least one polyamide of the AABB type.

11. Use of a polyamide powder according to any of Claims 1 to 8 in powder bed fusion methods for production of shaped bodies.

12. Shaped bodies obtained at least partly from the polyamide powder according to any of Claims 1 to 8.

13. Process for producing shaped bodies by means of powder bed fusion methods, **characterized in that** a polyamide powder according to any of Claims 1 to 8 is used.

## Revendications

1. Poudre de polyamide pour un procédé de fusion de lit de poudre, le polyamide étant choisi parmi un polyamide 6, 11, 12, 1013, 1012, 66, 46, 613, 106, 11/1010, 1212 et 12/1012, le polyamide présentant une viscosité en solution dans le m-crésol selon la norme ISO 307 de 1,55 à 1,75 et une augmentation de la viscosité en solution de 10 % à 40 %, de préférence 20 % à 30 %, lorsqu'il est soumis sous une atmosphère d'azote pendant 24 h à une température qui se situe 10 °C en dessous de sa température de fusion, et des groupes terminaux de type acide carboxylique étant présents en excès dans le polyamide, **caractérisée en ce que** l'excès des groupes terminaux de type acide carboxylique par rapport aux groupes terminaux de type amine est de 20 à 60 mmol/kg de poudre de polyamide.

2. Poudre de polyamide selon la revendication 1, **caractérisée en ce que** l'excès est atteint par des acides dicarboxyliques.

3. Poudre de polyamide selon l'une quelconque des revendications précédentes, **caractérisée en ce que** la surface BET de la poudre de polyamide, mesurée selon la norme DIN ISO 9277, est d'au moins 1 m²/g, de préférence 2,5 m²/g.

4. Poudre de polyamide selon l'une quelconque des revendications précédentes, **caractérisée en ce que** le diamètre moyen de grain en poids d₅₀ de la poudre de polyamide, mesuré au moyen d'une diffraction laser, n'est pas supérieur à 100 µm, de préférence de 10 µm à 80 µm.

5. Poudre de polyamide selon l'une quelconque des revendications précédentes, **caractérisée en ce que** la densité apparente, mesurée selon la norme DIN 53466, se situe entre 300 g/L et 600 g/L.

6. Poudre de polyamide selon l'une quelconque des revendications précédentes, **caractérisée en ce qu'**elle est obtenue par un processus de précipitation.

7. Poudre de polyamide selon l'une quelconque des revendications précédentes, **caractérisée en ce que** le polyamide est choisi dans le groupe d'un polyamide 6, 11, 12, 1013, 1012, 66, 46, 613, 106 et 12/1012.

8. Poudre de polyamide selon l'une quelconque des revendications précédentes, **caractérisée en ce que** l'énergie de surface des polyamides, mesurée au moyen d'une mesure d'angle de contact d'après la méthode de montée capillaire en utilisant l'équation de Washburn et le procédé d'évaluation selon Owens, Wendt Rabel et Kaelble, n'est pas supérieure à 35 mN/m, de préférence de 25 mN/m à 32 mN/m.

9. Procédé de préparation d'une poudre de polyamide selon l'une quelconque des revendications 1 à 8, comprenant les étapes
a) polymérisation et/ou polycondensation de monomères pour donner un polyamide,
b) préparation d'une poudre par broyage ou précipitation,
**caractérisé en ce que** dans l'étape a) des acides dicarboxyliques sont ajoutés en tant que régulateur pour atteindre un excès de groupes terminaux de type acide carboxylique, les acides dicarboxyliques étant ajoutés en un rapport pour atteindre un excès de 20 à 60 mmol/kg de groupes terminaux de type acide carboxylique (par rapport à la masse de la poudre de polyamide).

10. Procédé selon la revendication 9, **caractérisé en ce que** dans l'étape a) au moins un polyamide du type AB, préparé par polymérisation de lactames comportant 4 à 14 atomes de carbone dans le motif monomérique ou par polycondensation des acides w-aminocarboxyliques correspondants comportant 4 à 14 atomes de carbone dans le motif monomérique et au moins un polyamide du type AABB, préparé par polycondensation de diamines et d'acides dicarboxyliques comportant à chaque fois 4 à 14 atomes de carbone dans les motifs monomériques, est obtenu, la poudre dans l'étape b) étant obtenue par précipitation commune de l'au moins un polyamide AB et de l'au moins un polyamide du type AABB.

11. Utilisation d'une poudre de polyamide selon l'une quelconque des revendications 1 à 8 dans un procédé de fusion de lit de poudre pour la préparation de corps moulés.

12. Corps moulés qui sont obtenus au moins partiellement à partir de la poudre de polyamide selon l'une quelconque des revendications 1 à 8.

13. Procédé de préparation de corps moulés au moyen d'un procédé de fusion de lit de poudre, **caractérisé en ce qu'**une poudre de polyamide selon l'une quelconque des revendications 1 à 8 est utilisée.
